# EUROPEAN PATENT APPLICATION

(11) **EP 4 564 132 A1**
(43) Date of publication of application: **04.06.2025**
(21) Application number: 23213675.4
(22) Date of filing: 01.12.2023
(51) Int. Cl.: G06F 3/01

(54) **AUGMENTED-REALITY SUPPORTED NON-DESTRUCTIVE TESTING**

(71) Applicant: LEICA GEOSYSTEMS AG, 9435 Heerbrugg (CH)
(72) Inventor: LÜTOLF, Angelo, 9436 Balgach (CH); CAMPAGNA, Clayton Eugene, 9000 St. Gallen (CH); KANEIDER, Wilfried, 6830 Rankweil-Brederis (AT); FJELLVANG, Rune, 0196 Oslo (NO)
(74) Representative: Kaminski Harmann

(57) **Abstract**

The invention pertains to a method and a system (1) for non-destructive testing of a structure, the system comprising a data-acquisition device (20) comprising at least one NDT sensor (21) configured to detect features inside the structure by means of non-destructive testing and to generate feature data (31) related to the detected features, wherein the system comprises an augmented-reality device (10) comprising at least one camera (13) and a display unit (17), wherein the at least one camera is configured to capture images of a surrounding and to generate image data (33), the surrounding comprising at least one surface of the structure, the system comprises a computing unit (15) that is configured to generate AR image data (35) based on the image data and on NDT data and to provide the AR image data to the display unit, and the display unit is configured to present, based on the AR image data, AR images in real time to a user of the system, wherein the NDT data comprises the feature data, and/or instruction data comprising measuring instructions for the user for performing the non-destructive testing of the structure using the data-acquisition device.

## Description

The present invention generally pertains to the field of non-destructive testing (NDT). More specifically, the invention pertains to supporting a person conducting NDT by the use of augmented reality (AR).

Non-destructive testing includes methods that do not damage the parts being tested. NDT uses various inspection techniques to assess individual or group components. By employing different principles from physics, chemistry, and mathematics, NDT can test components without causing damage. One special field of NDT is directed to the testing of buildings and other structures, i.e., by determining the position and condition of reinforced bars (rebar) inside of the structure, e.g., inside of a wall of a building.

According to known solutions for NDT, the data acquisition follows a grid pattern. The grid must have known dimensions and allows a plurality of 2D line scans to be related to each other. This grid may be painted by hand, which is time-consuming, or a paper grid may be used, which may be difficult to place at challenging locations. Also, paper grids have specific sizes so that there is not always a fitting grid size available for the job at hand.

Often, post-processing of the data in the office is necessary. To visualize the collected data, known solutions often do not provide a satisfying solution. The visualized data may be sketched on the tested wall or structure. However, for this to work there is a need to reposition within the room relative to the collected data. Also, there is no option for efficiently visualizing depth with this approach.

It is therefore an object of the present invention to provide an improved system and an improved method for non-destructive testing of a structure that overcome the problems of the prior art.

At least one of these objects is achieved by the system according to claim 1, the method according to claim 13, and/or the dependent claims.

A first aspect of the invention pertains to a system for non-destructive testing (NDT) of a structure, the system comprising a data-acquisition device (NDT device) comprising at least one NDT sensor configured to detect features inside the structure by means of NDT and to generate feature data related to the detected features. According to this aspect of the invention, the system comprises an augmented-reality (AR) device comprising at least one camera and a display unit, wherein the at least one camera is configured to capture images of a surrounding and to generate image data, the surrounding comprising at least one surface of the structure. The system further comprises a computing unit that is configured to generate AR image data based on the image data and on NDT data and to provide the AR image data to the display unit. The display unit is configured to present, based on the AR image data, AR images in real time to a user of the system. The NDT data comprises either the feature data, instruction data or both, wherein the instruction data comprises measuring instructions for the user for performing the non-destructive testing of the structure using the data-acquisition device.

According to some embodiments of the system, the AR device is configured as a wearable, e.g., as AR goggles, to be worn by the user. According to some embodiments, it is configured as a projector, e.g., as a head-up display. Alternatively, the AR device may be configured as a handheld device having a touchscreen, e.g., a smartphone or tablet computer. According to some embodiments, the AR device comprises the computing unit. According to some embodiments, the AR device comprises an inertial measuring unit and/or a gyroscope.

According to some embodiments of the system, the at least one camera is configured to capture the images as an image stream, and the display unit is configured to present the AR images in real time as a live AR image stream.

According to some embodiments of the system, the NDT data comprises at least the feature data, and at least a subset of the AR images shows the structure overlaid with representations of the detected features. In some embodiments, the data-acquisition device comprises a plurality of different NDT sensors, including at least a radar sensor, an inductive sensor and/or a capacitive sensor. In some embodiments, the representations of the detected features are presented in the AR images in a 3D view.

According to some embodiments, the at least one NDT sensor is configured to determine properties of the features, the properties comprising at least a kind of the feature or a material of the feature, the feature data comprising information about the determined properties, and the representations of the detected features are presented in the AR images together with the information about the determined properties, wherein different kinds of features or different materials are highlighted or coloured differently. For instance, the highlighting or colouring of the different kinds of features and/or the different materials may be user-selectable.

According to some embodiments, the data-acquisition device comprises a plurality of NDT sensors of different sensor types, such as inductive sensors, capacitive sensors, and/or radar sensors. The computing unit can then be configured to determine, based on feature data generated by NDT sensors of two or more different sensor types, object types of the features, such as water pipes, plastic pipes, copper pipes, live wires, and reinforcement bars. The representations of the detected features may then be presented in the AR images together with information about their object type, wherein different object types are highlighted or coloured differently (the highlighting or colouring may be user-selectable) .

According to some embodiments, the computing unit is configured to generate further information based on the feature data (and optionally other information). At least a subset of the AR images then shows the structure overlaid with said further information, the further information comprising areas that are or safe or unsafe to drill into and/or locations that should be inspected further.

According to some embodiments of the system, the NDT data comprises at least the measuring instruction data, and at least a subset of the AR images shows the structure overlaid with the measuring instructions. The measuring instructions may comprise visual instructions on how to move the data-acquisition device over the structure.

In some embodiments, the measuring instructions comprise a grid that provides a pattern for moving the data-acquisition device over the structure. A size and shape of the grid may be user-selectable or may be selected automatically depending on a detected size and shape of the structure or of a scanning area on the structure.

In some embodiments, the computing unit is configured to identify the data-acquisition device in at least a subset of the images of the surrounding and to derive an actual position of the data-acquisition device relative to the structure. The measuring instructions then may be updated in real time based on the actual position of the data-acquisition device.

In some embodiments, in which the NDT data comprises the feature data and at least a subset of the AR images shows the structure overlaid with representations of the detected features, the AR images show representations of the detected features positioned relative to the structure based on the actual position of the data-acquisition device when detecting the respective features.

In some embodiments, the computing unit is configured to perform a user-guidance process, in the course of which the measuring instructions are updated in real time based on the actual position of the data-acquisition device to guide its user through the non-destructive testing of the structure.

In some embodiments, the computing unit is configured for generating documentation data of steps of the non-destructive testing of the structure, the documentation data comprising at least one of image, video and audio data. The computing unit is then further configured to automatically capture the documentation data, and/or to prompt the user to capture the documentation data, e.g., by displaying a visual indicator on the display unit.

According to some embodiments of the system, the computing unit is configured to detect a fiducial marker in at least a subset of the images of the surrounding and to extract computer-readable information from the fiducial marker. For instance, the fiducial marker can be provided on a surface of the structure, can be an ArUco marker, and/or can be an elongated element, such as a ribbon band.

In some embodiments, the fiducial marker comprises information that allows identifying the structure, and the computing unit is configured to identify the structure based on the information of the fiducial marker. Optionally, the computing unit may have access to a database providing a multitude of datasets with information about individual structures.

In some embodiments, the NDT data comprises the feature data, the computing unit has access to a database providing past NDT data of a previously performed NDT of the individual structure, and the computing unit is configured, upon identifying the structure, to generate the AR image data based on the image data and on the past NDT data.

In some embodiments, the fiducial marker comprises information that allows aligning the NDT data relative to the image data, and the computing unit is configured to generate the AR image data based on the information of the fiducial marker. Optionally, the computing unit may be configured to generate, based on the information of the fiducial marker, the AR image data by mooring coordinates of the NDT data to a 3D location, orientation and scale of the surface of the structure.

According to some embodiments of the system, the structure is a wall, a ceiling or a floor, and the features comprise at least one of reinforcement bars, conduits and utilities.

According to some embodiments of the system, the structure is a bridge, a viaduct, a pillar, a dam, or a tower (or a part thereof), and the features comprise at least one of reinforcement bars and post-tensioning cables.

Additionally, the features may comprise non-homogenous compositions of a material of the structure, such as a fault or a defect in the material or an absence (e.g., hole) of the material inside the structure.

A second aspect of the invention pertains to a computer-implemented method for NDT of a structure, e.g., using a system according the first aspect of the invention. Said method comprises, in real time:
- capturing, by at least one camera, images of a surrounding comprising the structure;
- identifying the structure in at least a subset of the images;
- generating AR images comprising first AR content being integrated into the captured images; and
- displaying the AR images to a user of a data acquisition device, wherein the first AR content comprises measuring instructions for performing the NDT of the structure, the measuring instructions being provided on the structure in the AR images.

According to some embodiments, the method comprises, while the user performs the NDT of the structure using the data acquisition device:
- capturing, by the at least one camera, images of the surrounding comprising the structure and the data acquisition device;
- deriving an actual position of the data-acquisition device relative to the structure;
- detecting, by the data acquisition device, features inside of the structure;
- generating AR images comprising second AR content being integrated into the captured images; and
- displaying the AR images to the user of the data acquisition device, wherein the second AR content comprises representations of the detected features, the representations of the detected features being provided in the AR images by overlaying them according to the derived actual position of the data-acquisition device relative to the structure while detecting the respective feature.

A third aspect of the invention pertains to a computer program product comprising program code having computer-executable instructions for performing, in particular when run in a system according to the first aspect of the invention, the method according to the second aspect of the invention.

The invention in the following will be described in detail by referring to exemplary embodiments that are accompanied by figures, in which:
- Fig. 1: illustrates performing non-destructive testing of a wall as an example of a structure;
- Figs. 2a-b: illustrate the use of an exemplary embodiment of a system according to the invention for non-destructive testing of a wall;
- Fig. 3: shows a first exemplary embodiment of a system according to the invention;
- Fig. 4: shows a second exemplary embodiment of a system according to the invention;
- Fig. 5: shows capturing an image of a wall using an exemplary embodiment of a system according to the invention;
- Fig. 6: shows a grid virtually projected onto the surface of the wall of Fig. 5;
- Fig. 7: shows a user performing non-destructive testing of the wall using the grid of Fig. 6;
- Fig. 8: shows features detected in the wall by NDT being virtually projected onto the surface of the wall in an AR image; and
- Fig. 9: shows a flowchart illustrating an exemplary embodiment of a method according to the invention.

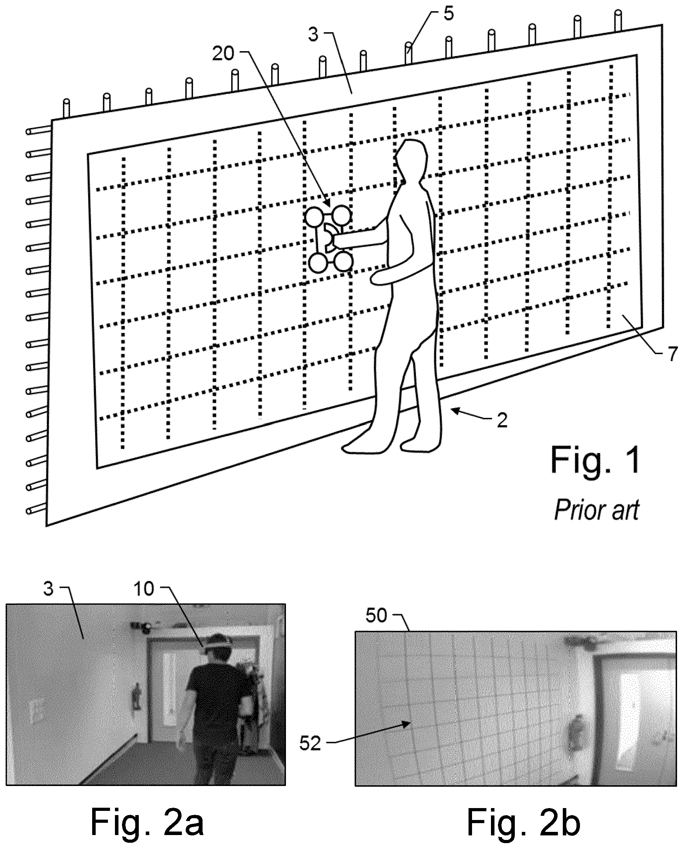

In Figure 1, a known method for non-destructive testing (NDT) of a structure is illustrated. In the shown example, the structure is a wall 3. A user 2 of an NDT data acquisition device 20 moves the device over the surface of the wall 3 to detect features such as reinforcement bars (rebars) 5 inside the wall 3. Since the data acquisition preferably follows a grid pattern, in the shown example, the user 2 has attached a grid paper 7 to the wall which comprises the grid. After the NDT has been finished, the data may be uploaded to a device having a display, e.g., to a laptop computer, so that detected rebars and other features may be visualized. The data-acquisition device may comprise a plurality of different NDT sensors (i.e., different sensor types), such as inductive, capacitive, and/or radar sensors.

Figures 2a and 2b illustrate an improved method for NDT according to the invention. Figure 2a shows a user 2 wearing AR goggles 10 in front of a wall 3 to be tested. Figure 2b shows the AR image 50 presented to the user on his AR goggles. The grid 52 for performing the NDT is provided as augmented content on the wall of the real-world image.

This allows for a flexible grid size depending on needs, wherein a positioning relative to known location is possible, e.g., by using fiducial markers. There is no need for markings on the scanning surfaces or for attaching paper grid on the scanning surfaces, which is particularly difficult on walls or ceilings. Also, a size of the scanning area or a scanning density is not restricted to pre-defined reference papers, and custom scan path patterns are possible. Additionally, in some embodiments, detected objects may be visualized in 3D relative to a known location (e.g., to fiducial markers). This also allows to visualize locations which are or are not allowed to be drilled into, and/or to detect and highlight critical locations that must be opened for inspection.

Instead of AR goggles 10 as shown here, other suitable devices may be used that allow displaying augmented reality information to the user 2. For instance, such devices may include other wearables, projectors, or head-up displays. Alternatively, the AR device may be configured as a handheld device having a touchscreen, a camera and an IMU, e.g., a smartphone or tablet computer on which a software application (app) may be installed, which allows the AR device to cooperate with the NDT device and to display the AR images on the touchscreen in dependence of a pose of the AR device, the pose being detectable by means of the IMU and/or the camera.

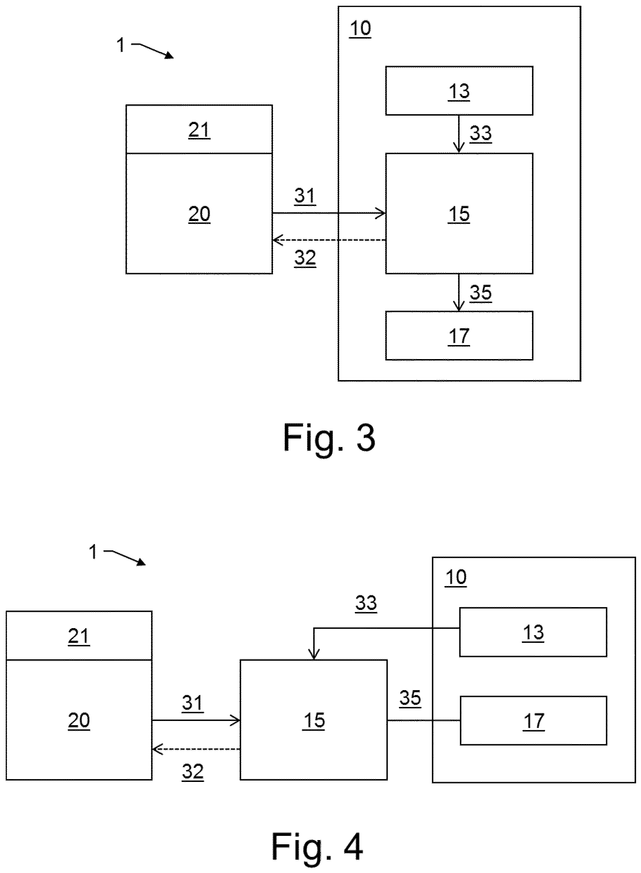

Figure 3 schematically shows a first embodiment of a system 1 according to the invention and the flow of data in this embodiment. The system comprises an augmented-reality device (AR device) 10, comprising one or more cameras 13, a computing unit 15 and a display unit 17. For instance, the AR device 10 may be configured as a wearable device (such as the AR goggles of Figure 2a), as a tablet computer or similar apparatus. The AR device 10 may comprise further sensors that facilitate detecting its current pose and/or movement, for instance including accelerometers, an inertial measuring unit (IMU), a digital compass and/or a gyroscope.

The system further comprises an NDT data acquisition device (NDT device) 20, comprising one or more NDT sensors 21 configured for detecting features inside of a structure. Optionally, the NDT device 20 allows material discrimination for detecting and classifying features in the structure. For instance, this can be achieved by combining different NDT sensors 21 like radar, inductive sensors and capacitive sensors.

Various features may be detected, classified and visualized by methods and systems according to the invention. For instance, these features may comprise reinforcement bars, tendon cables, post-tensioning cables, conduits, pipes (e.g., gas or water pipes) and utilities (e.g., electric cables). These features may also comprise hidden defects and other anomalies of the structure such as voids, cracks, foreign objects or material anomalies.

The cameras 13, capturing images of a surrounding, provide image data 33 to the computing unit 15. The computing unit generates AR image data 35 and provides it to the display unit 17, which displays AR images to the user based on the AR image data 35.

Generating the AR image data 35 is based at least on the provided image data 33 and on AR content. The AR content may comprise measuring instructions for the user, e.g. (as shown in Figure 2b) in form of a grid, the instructions being projected directly on the structure in the AR images.

The AR content may also comprise features detected by the NDT device 20. In this case the NDT device sends NDT data 31 to the computing unit, e.g. via a wireless data connection, such as Bluetooth or WiFi. The detected features are then projected on the structure in the AR images.

For correctly positioning and orienting the AR content relative to the structure in the AR images, the cameras 13 optionally may capture images of a fiducial marker on the structure. Also, the cameras 13 may capture images of the NDT device 20 while the NDT is performed.

Optionally, the computing unit 15 may be configured to provide instruction data 32 with measuring instructions for the user to the NDT device 20, and the NDT device 20 may comprise means for displaying the instructions to the user, e.g. in addition to a grid being displayed in AR images on the display unit 17. These means, for instance, may comprise a small display or LEDs on the NDT device indicating a distance to follow along the grid.

Figure 4 schematically shows a second embodiment of a system 1 according to the invention and the flow of data in this embodiment. In this embodiment, the computing unit 15 is not part of the AR device 10. This allows for a lighter and smaller AR device 10 which consumes less electric power, which is especially desirable if the AR device 10 is configured as a wearable (e.g., as AR goggles). For instance, the computing unit 15 may be part of a multi-purpose personal device of the user, e.g. a smartphone, on which a software ("app") is installed that allows generating the AR image data 35. Alternatively, the computing unit 15 may be part of a computer that, for instance, could be a stationary computer positioned near the site of the NDT operation or embodied as a remote server computer or as a computer cloud. Also, the computing unit 15 could be integrated into the NDT device 20.

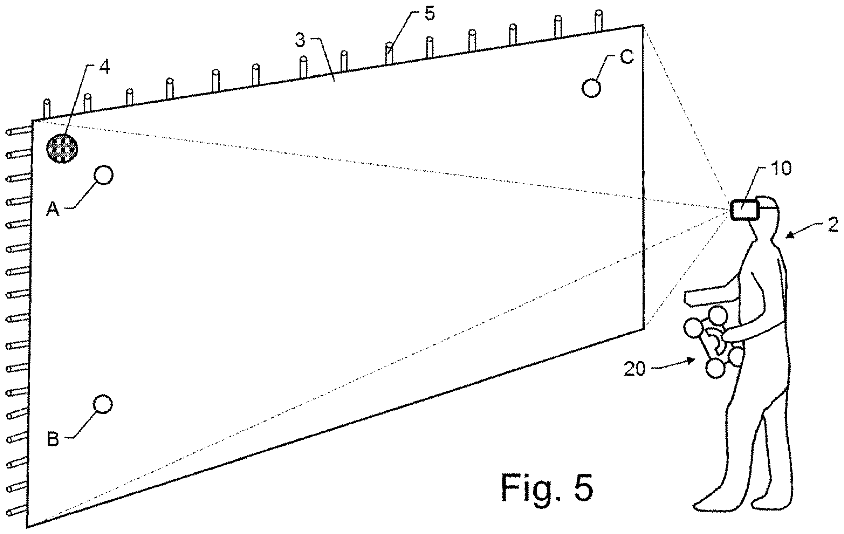

Figures 5 to 7 illustrate an exemplary NDT process using a system according to the invention. In the course of this process, the user 2 is guided by projecting a virtual scan area grid in a defined location (in particular on the structure to be tested), wherein the grid is anchored with reference to the real world.

Figure 5 illustrates an initial setup of the grid scan area on the wall 3 using the AR goggles 10 worn by the user 2. By using one or more fiducial markers (e.g., ArUco markers), the grid scan area size and position can be automatically detected using the cameras of the AR googles and available 3D mesh information. The use of such fiducial markers with AR systems, the fiducial markers having a defined pose relative to a coordinate system, is disclosed in US 10,347,051 B2.

For instance, as illustrated in Figure 5, three points A, B, C marked with fiducial markers can define the grid scan area plane in 3D space. These markers can be detected using the camera on the AR goggles. If the AR goggles provide a 3D mesh of the environment, mapping to the wall 3 can be done automatically. Alternatively, the grid scan area initially may be defined by the user by manually defining the corner points of the 2D grid scan area.

In some embodiments, a single fiducial marker 4 (e.g., a single ArUco marker) may be provided permanently at the wall 3. This allows unambiguously identifying the structure to be tested. Also, the manual grid definition may be based on the single fiducial marker 4 to map the grid scan to a serial number or specific fiducial marker pattern.

Optionally, the fiducial marker 4 can be an elongated fiducial marker, e.g. in the form of a ribbon band. This may allow for a better detection of the marker, and an improved referencing and scaling. For instance, the ribbon band be about 5cm wide and up to 10m long. It can be provided in arbitrary position on the wall 3 or other feature, either permanently or temporarily, i.e. only during the measurement.

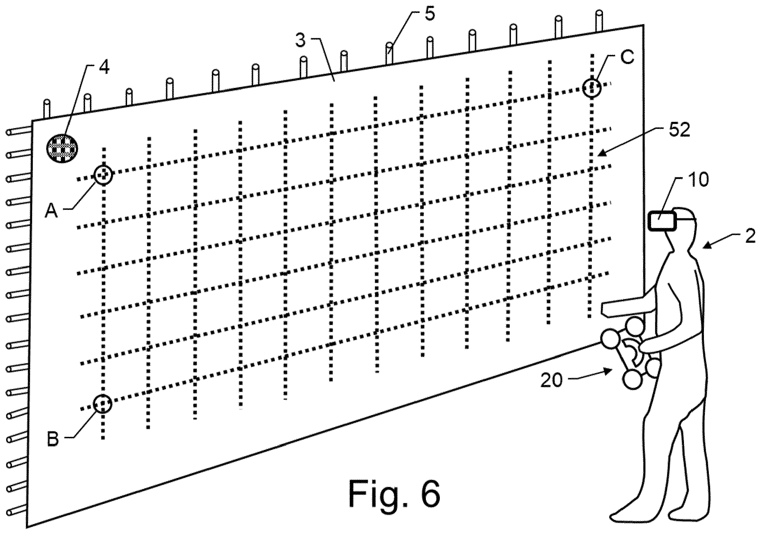

Figure 6 shows a grid 52, which - using the three points A, B, C - is projected onto the wall 3 in the AR image presented to the user 2 by the AR goggles 10. By defining three points A, B, C in 3D space a plane can be constructed where all parameters are fully defined. The AR goggles 10 may provide the necessary tools for selecting points in 3D space either by hand gesture tracking or by controllers. Three points A, B, C are sufficient to fully define the grid on flat surfaces or even on slightly curved surfaces if they are "quasi-flat" - from a mathematical point of view and from a local point of view. In case of more complex, non-quasi flat surfaces (i.e., columns with small radius) additional points or parameters could be defined in order to project the grid.

The size and shape of the grid 52 may vary depending on a detected size and shape of the scanning area. In particular, grid shapes need not be limited to rectangles. Also, obstacles on the surface which need to be scanned may be taken into account when defining the grid 52. Optionally, the size and shape of the grid 52 may be selectable or customizable by the user 2.

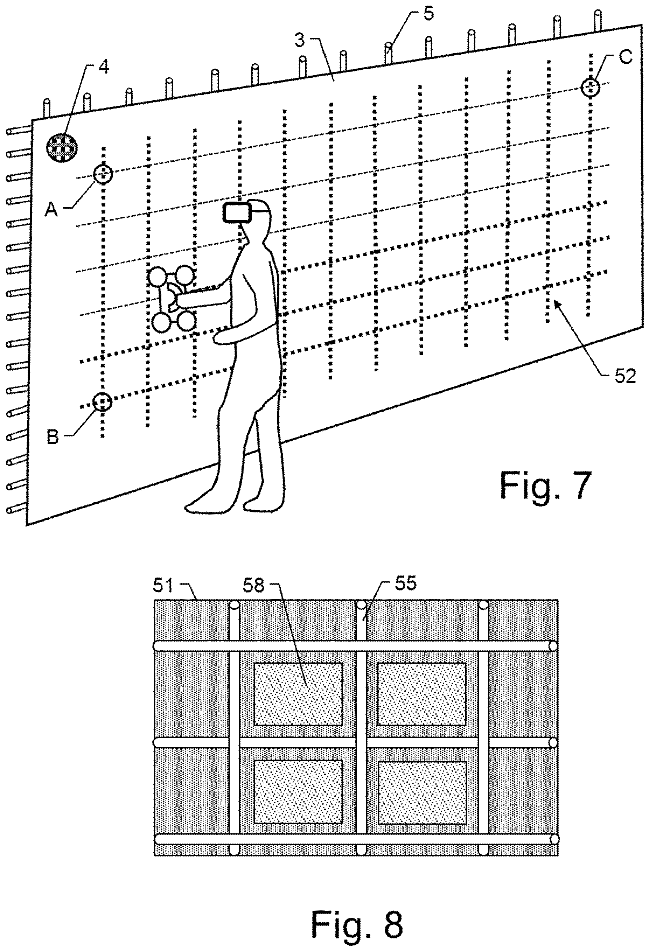

Figure 7 shows the user 2 performing NDT using the NDT device 20, while the grid 52 is shown in the AR images presented to the user 2 by the AR goggles 10. The AR goggles 10 provide camera images from the person's point of view. Combining the grid plane information and visual tracking of unique features of the NDT device 20 over the camera, a 3D position of the NDT device 20 - particularly relative to the wall 3 - can be defined.

The camera may also detect, which parts of the grid 52 have already been tested and update the grid 52 in real time, e.g. by only displaying the remaining parts of the grid 52 or by highlighting those parts of the grid that have already been tested differently than the remaining parts of the grid 52 (e.g. using different colours). The process may also be split into sub-processes, so that only one line of the grid 52 may be displayed at the same time, i.e. that line of the grid 52, along which the user is performing the current part (or the next part) of the measurement.

The user may be guided through the process by providing feedback in the AR images to correct or improve the data collection process. For instance, if the position of the sensor of the NDT device 20 is deviating from the current line, the user can be given feedback, e.g. by displaying arrows indicating how to correct the sensor position (up, down, left, right). If the whole grid is displayed and the user does not follow the correct sequence of grid lines, this may be indicated in the AR images, e.g. by highlighting the correct line. Optionally, if a deviation is detected, this may be taken into account in the data processing, in order to automatically correct the user's error.

A scan surface has been defined over points A, B and C, providing a 2D plane where the device 20 will always be on during data collection. The AR Goggles 10 have position reference to the grid 52 through points A, B, C. The camera on the AR goggles 10 can track the NDT device 20 by recognizing significant features or geometries of the device. As the NDT device 20 will always drive on the previously defined 2D plane (or slightly curved surface), camera images (or more) can add sufficient information to track the device 20 in three dimensions, fully defining the device position relative to points A, B, C.

Detected features (e.g., rebars 5 and utilities) in the wall 3 are referenced to the grid corner points A, B, C, which allows the AR goggles 10 to visualize the objects at their corresponding locations after initial setup has been done. Data visualization can be used for several purposes. The data captured by the AR device 10, particularly the AR images, and the data captured by the NDT device 20, i.e. the feature data related to the detected features are related in 3D space to each other.

Optionally, the process or important steps thereof may be documented by the AR googles 10 by taking and storing pictures, videos and/or audio of the process, which optionally may be combined with 3D space information, e.g. of the NDT sensor. This documentation may be done automatically or involve prompting the user 2 to do so.

Figure 8 shows an exemplary AR image 51, in which representations 55 of detected rebars are visualized on the wall. Such an image 51 may be visualized with actual data, i.e. of a presently tested wall, as well as with past data, i.e. for a wall that has been tested a while ago, where the data has been retrieved from a database (e.g. automatically upon recognizing the wall). Visualizing such features allows relocating these features for later inspection and also allows avoiding hitting them when drilling holes.

Optionally, further information may be generated based on the detected features and visualized in the AR image 51. Preferably, the representations 55 may be visualized in 3D. Presently available AR solutions that allow this include the Oculus Quest 2, the Microsoft HoloLens and a 3D rendering software such as Unity.

To prevent hitting structural elements within the wall, in the shown example this further information comprises highlighting areas 58 that are safe to drill into. Alternatively, the NDT sensor data (e.g., detected life wire) may be used to highlight dangerous zones where drilling should be avoided. Also, locations may be defined and highlighted that should be inspected further. Depth of detected utilities may be highlighted using colour grading, material properties may be highlighted using overlaid symbols, marks, icons, text or abstracted objects (e.g., spheres or cylinders). Detected features may be classified (e.g., as rebars, conduits, water pipes, pockets) and highlighted by representative geometrical overlays (e.g. cylinders, rectangular objects, tubes or spheres).

Visualizing the feature data may comprise object discrimination. This involves sensor fusion on the side of the NDT device, so that the different detected properties or objects can be visualizing. For instance, this may include highlighting different kinds of objects (e.g., highlighting representations of rebars differently than representations of pipes) or showing different materials (e.g. plastic, iron, copper) in different colours.

A plurality of NDT sensors of different sensor types may be used for detecting the features, for instance inductive sensors, capacitive sensors, and radar sensors. Based on feature data generated by NDT sensors of two or more different sensor types, object types of the features may be determined, such as water pipes, plastic pipes, copper pipes, live wires, and reinforcement bars. Representations of the detected features may then be presented in the AR images according to their object type, e.g., highlighted or coloured differently.

For instance, if radar detects a strong signal, whereas the inductive sensor gives no signal, it is likely that the feature is a non-metal object like a water pipe (containing water). If radar detects a weak signal, and the inductive sensor gives no signal, it is likely that the feature is a non-metal object like an empty plastic pipe. If radar detects a strong signal, and the inductive sensor senses a non-ferrous metal object, it is likely that the feature is a copper pipe as used for heating. If radar detects a strong signal, and the inductive sensor senses a ferrous metal object, it is likely that the feature is a reinforcement bar. If radar detects a signal, the inductive sensor senses a non-ferrous metal object, and the capacitive sensor detects 50Hz, it is likely that the feature is a live wire.

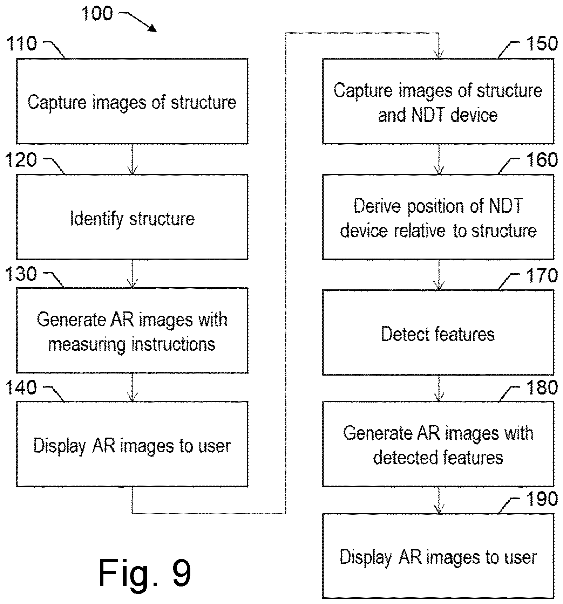

Figure 9 shows a flow-chart illustrating an exemplary computer-implemented method 100 for non-destructive testing of a structure. The structure may be a part of a building, e.g. a wall, floor or ceiling. The structure may also be a bridge, a viaduct, a pillar, a dam, a tower, or a part of one of these. The method 100 may be performed using a system as described above, e.g. with respect to Figures 3a or 3b.

The method 100 comprises, in real time:
- capturing 110, by at least one camera, e.g. a camera of an AR device such as AR goggles, images of a surrounding comprising the structure;
- identifying 120 the structure in at least a subset of the images;
- generating 130 AR images comprising AR content that is integrated into the captured images, wherein the AR content comprises measuring instructions for performing the non-destructive testing of the structure; and
- displaying 140 the AR images to a user of a data acquisition device, e.g. of an NDT device, wherein the measuring instructions are provided in the AR images by overlaying them on the structure.

As described above, e.g. with respect to Figures 6 and 7, the measuring instructions may comprise a grid that is projected on the structure in the AR images. While the user performs the non-destructive testing (NDT process) of the structure using the data acquisition device according to the measuring instructions, the method 100 further comprises (particularly continuously during the NDT process):
- capturing 150, by the at least one camera, images of the surrounding comprising the structure and the data acquisition device;
- deriving 160 an actual position of the data-acquisition device relative to the structure;
- detecting 170, by the data acquisition device, features inside of the structure, e.g. conduits, utilities, reinforcement bars or post-tensioning cables;
- generating 180 AR images comprising representations of the detected features as further AR content being integrated into the captured images; and
- displaying 190 the AR images to the user of the data acquisition device, wherein the representations of the detected features are provided in the AR images by overlaying them on the structure according to the derived actual position of the data-acquisition device relative to the structure while detecting the respective feature.

Although the invention is illustrated above, partly with reference to some preferred embodiments, it must be understood that numerous modifications and combinations of different features of the embodiments can be made. All of these modifications lie within the scope of the appended claims.

## Claims

1. System (1) for non-destructive testing of a structure, the system comprising a data-acquisition device (20) comprising at least one NDT sensor (21) configured to detect features inside the structure by means of non-destructive testing and to generate feature data (31) related to the detected features,
**characterized in that**
- the system (1) comprises an augmented-reality device (10) comprising at least one camera (13) and a display unit (17), wherein the at least one camera (13) is configured to capture images of a surrounding and to generate image data (33), the surrounding comprising at least one surface of the structure;
- the system (1) comprises a computing unit (15) that is configured to generate AR image data (35) based on the image data (33) and on NDT data and to provide the AR image data (35) to the display unit (17); and
- the display unit (17) is configured to present, based on the AR image data (35), AR images (50, 51) in real time to a user (2) of the system (1),
wherein the NDT data comprises the feature data (31), and/or instruction data comprising measuring instructions for the user (2) for performing the non-destructive testing of the structure using the data-acquisition device (20).

2. System (1) according to claim 1, wherein the augmented-reality device (10)
- is configured as a wearable, particularly as AR goggles, to be worn by the user (2);
- is configured as a handheld device, particularly as a tablet computer;
- is configured as a projector, particularly as a head-up display;
- comprises the computing unit (15); and/or
- comprises an inertial measuring unit and/or a gyroscope.

3. System (1) according to claim 1 or claim 2, wherein
- the at least one camera (13) is configured to capture the images as an image stream, and
- the display unit (17) is configured to present the AR images (50, 51) in real time as a live AR image stream.

4. System (1) according to any one of the preceding claims, wherein
- the NDT data comprises at least the feature data (31); and
- at least a subset of the AR images (51) shows the structure overlaid with representations (55) of the detected features,
particularly wherein
- the data-acquisition device (20) comprises a plurality of different NDT sensors (21), including at least a radar sensor, an inductive sensor and/or a capacitive sensor; and/or
- the representations (55) of the detected features are presented in the AR images (51) in a three-dimensional view.

5. System (1) according to claim 4, wherein
- the at least one NDT sensor (21) is configured to determine properties of the features, the properties comprising at least a kind of the feature or a material of the feature, the feature data (31) comprising information about the determined properties; and
- the representations (55) of the detected features are presented in the AR images (51) together with the information about the determined properties, wherein different kinds of features or different materials are highlighted or coloured differently,
particularly wherein the highlighting or colouring of the different kinds of features and/or the different materials is user-selectable.

6. System (1) according to claim 4 or claim 5, wherein
- the data-acquisition device (20) comprises a plurality of NDT sensors (21) of different sensor types, the different sensor types comprising at least inductive sensors, radar sensors, and/or capacitive sensors, and
- the computing unit (15) is configured to determine, based on feature data (31) generated by NDT sensors (21) of two or more different sensor types, object types of the features, the object types comprising one or more of water pipes, plastic pipes, copper pipes, live wires, and reinforcement bars; and
- the representations (55) of the detected features are presented in the AR images (51) together with information about their object type, wherein different object types are highlighted or coloured differently.

7. System (1) according to any one of claims 4 to 6, wherein the computing unit (15) is configured to generate further information based at least on the feature data (31), and at least a subset of the AR images (51) shows the structure overlaid with the further information, the further information comprising at least
- areas (58) that are safe to drill into;
- areas that are unsafe to drill into; and/or
- locations that should be inspected further.

8. System (1) according to any one of the preceding claims, wherein
- the NDT data comprises at least the measuring instruction data; and
- at least a subset of the AR images (51) shows the structure overlaid with the measuring instructions,
particularly wherein the measuring instructions comprise visual instructions on how to move the data-acquisition device (20) over the structure.

9. System (1) according to claim 8, wherein the measuring instructions comprise a grid (52), the grid (52) providing a pattern for moving the data-acquisition device (20) over the structure, particularly wherein a size and shape of the grid (52)
- are user-selectable; and/or
- are automatically selected depending on a detected size and shape of the structure or of a scanning area on the structure.

10. System (1) according to claim 8 or claim 9, wherein the computing unit (15) is configured to identify the data-acquisition device (20) in at least a subset of the images of the surrounding and to derive an actual position of the data-acquisition device (20) relative to the structure, particularly wherein the measuring instructions are updated in real time based on the actual position of the data-acquisition device (20).

11. System (1) according to claim 10, wherein
- the NDT data comprises at least the feature data (31); and
- at least a subset of the AR images (51) shows the structure overlaid with representations (55) of the detected features, wherein the AR images (51) show representations (55) of the detected features positioned relative to the structure based on the actual position of the data-acquisition device (20) when detecting the respective features.

12. System (1) according to any one of the preceding claims, wherein
- the structure is a wall (3), a ceiling or a floor, and the features comprise at least one of reinforcement bars (5), conduits and utilities; or
- the structure is a bridge, a viaduct, a pillar, a dam, or a tower, and the features comprise at least one of reinforcement bars (5) and post-tensioning cables,
in particular wherein the features comprise non-homogenous compositions of a material of the structure, particularly a hole, a fault or a defect in the material or an absence of the material inside the structure.

13. Computer-implemented method (100) for non-destructive testing of a structure, particularly using a system (1) according to any one of the preceding claims, the method comprising, in real time:
- capturing (110), by at least one camera (13), images of a surrounding comprising the structure;
- identifying (120) the structure in at least a subset of the images;
- generating (130) AR images (5) comprising first AR content being integrated into the captured images; and
- displaying (140) the AR images (5) to a user (2) of a data acquisition device (20), wherein the first AR content comprises measuring instructions for performing the non-destructive testing of the structure, the measuring instructions being provided on the structure in the AR images (5).

14. Computer-implemented method (100) according to claim 13, comprising, while the user (2) performs the non-destructive testing of the structure using the data acquisition device (20):
- capturing (150), by the at least one camera (13), images of the surrounding comprising the structure and the data acquisition device (20);
- deriving (160) an actual position of the data-acquisition device (20) relative to the structure;
- detecting (170), by the data acquisition device (20), features inside of the structure;
- generating (180) AR images (5') comprising second AR content being integrated into the captured images; and
- displaying (190) the AR images (5') to the user (2) of the data acquisition device (20), wherein the second AR content comprises representations (55) of the detected features, the representations (55) of the detected features being provided in the AR images (5') by overlaying them according to the derived actual position of the data-acquisition device (20) relative to the structure while detecting the respective feature.

15. Computer program product comprising program code having computer-executable instructions for performing, in particular when run in a system (1) according to any one of claims 1 to 12, the method (100) according to claim 13 or claim 14.

16. System (1) according to claim 10 or claim 11, wherein the computing unit (15) is configured to perform a user-guidance process, in the course of which the measuring instructions are updated in real time based on the actual position of the data-acquisition device (20) to guide the user (2) of the data-acquisition device (20) through the non-destructive testing of the structure.

17. System (1) according claim 16, wherein in the course of the user-guidance process the computing unit (15) is configured for generating documentation data of steps of the non-destructive testing of the structure, the documentation data comprising at least one of image, video and audio data, wherein the computing unit (15) is configured
- to automatically capture the documentation data; and/or
- to prompt the user to capture the documentation data, particularly by displaying a visual indicator on the display unit (17).

18. System (1) according to any one of claims 1 to 12 or claims 16 to 17, wherein the computing unit (15) is configured to detect a fiducial marker (4) in at least a subset of the images of the surrounding and to extract computer-readable information from the fiducial marker (4), particularly wherein the fiducial marker (4)
- is provided on a surface of the structure,
- is an ArUco marker, and/or
- is an elongated element, particularly a ribbon band.

19. System (1) according to claim 18, wherein the fiducial marker (4) comprises information that allows identifying the structure, and the computing unit (15) is configured to identify the structure based on the information of the fiducial marker (4), particularly wherein the computing unit (15) has access to a database providing a multitude of datasets with information about individual structures.

20. System (1) according to claim 19, wherein
- the NDT data comprises the feature data (31);
- the computing unit (15) has access to a database providing past NDT data of a previously performed non-destructive testing of the individual structure; and
- the computing unit (15) is configured, upon identifying the structure, to generate the AR image data (35) based on the image data (33) and on the past NDT data.

21. System (1) according to any one of claims 18 to 20, wherein the fiducial marker (4) comprises information that allows aligning the NDT data relative to the image data (33), and the computing unit (15) is configured to generate the AR image data (35) based on the information of the fiducial marker (4), particularly wherein the computing unit (15) is configured to generate, based on the information of the fiducial marker (4), the AR image data (35) by mooring coordinates of the NDT data to a three-dimensional location, orientation and scale of the surface of the structure.
